# EUROPEAN PATENT APPLICATION

(11) **EP 2 343 701 A1**
(43) Date of publication of application: **13.07.2011**
(21) Application number: 10165132.1
(22) Date of filing: 07.06.2010
(51) Int. Cl.: G11B 5/64, G11B 5/84

(54) **Discontinuous islanded ferromagnetic recording film with perpendicular magnetic anisotropy**

(30) Priority: 08.01.2010 TW 099100333
(71) Applicant: Lin, Ger-Pin, Taipei 10617 (TW); Chang, Ching-Ray, Taipei City 106 (TW)
(72) Inventor: Lin, Ger-Pin, 10617 Taipei (TW); Chang, Ching-Ray, 106 Taipei City (TW); Kuo, Po-Cheng, 10617 Taipei (TW); Chen, Sheng-Chi, 104 Taipei City (TW); Shen, Chih-Lung, Taipei 10617 (TW); Huang, Kai-Tze, 10617 Taipei (TW)
(74) Representative: Liedtke, Markus

(57) **Abstract**

The present invention discloses a discontinuous islanded ferromagnetic recording film with perpendicular magnetic anisotropy. The discontinuous islanded ferromagnetic recording film includes a substrate and a ferromagnetic layer. The ferromagnetic layer is formed on the substrate and annealed by a high-temperature vacuum annealing process. After annealing, a surface energy difference existed between the ferromagnetic layer and the substrate turns the ferromagnetic layer into well-separated and discontinuous islanded ferromagnetic particles. Each islanded ferromagnetic particle is thought of a single magnetic domain, which is beneficial to achieve a discontinuous islanded ferromagnetic recording film with perpendicular magnetic anisotropy.

## Description

### FIELD OF THE INVENTION

The present invention relates to a ferromagnetic recording film with perpendicular magnetic anisotropy, and more particularly to a discontinuous islanded ferromagnetic recording film with perpendicular magnetic anisotropy.

### BACKGROUND OF THE INVENTION

The recording density of the magnetic recording medium is inversely proportional to the size of the magnetic particle. According to the Stoner-Wohlfarth model, the minimum thermal stable grain size (Dp) of a magnetic recording medium is (60 K_{B}T/Kᵤ)^{1/3}, wherein Kᵤ is the magnetocrystalline anisotropy constant, K_{B} is the Boltzmann constant and T is the absolute temperature. Currently, the material of the most commonly used recording medium for the hard disk is the CoCrPtM alloy film (M=B, Ni, Ta or W), whose Kᵤ is about 2×10⁶ erg/cm³. Therefore, when the size of the magnetic particle of the CoCrPtM alloy film is smaller than 10 nm, the thermal stability will be deteriorated. Patterned media have been suggested as a potential solution for this physical limit.

L1₀ FePt film is the most promising candidate for application in magnetic recording media to increase the recording density beyond 1 Tb/in², because its high magnetocrystalline anisotropy constant (Kᵤ ∼ 7 × 10⁷ erg/cm³ ) could delay the occurrence of the superparamagnetic effect to reduce remarkably the minimal stable grain size to 3 nm. Hence, the FePt alloy film is promising to replace the current CoCrPt alloy film to become the mainstream material of the ultrahigh density magnetic recording medium in the next generation. In order to use FePt films as a patterned media, the well-separated L1₀ FePt nano-size islands onto Pt, Cr or Ru underlayer and a suitable porous anodic alumina (PAA) pattern plate had been widely studied. But these multilayer films result in the higher cost, poor reproducibility and undesirable interdiffusions between the FePt magnetic layer and underlayers.

The laser interference lithography (LIL), focused ion beam (FIB) and electron beam lithography methods have previously been investigated to fabricate the patterned magnetic thin films. However, these processed are not practical for the industrial production because their manufactures are prohibitively slow and expensive.

In order to overcome the drawbacks in the prior art, a well-separated and discontinuous islanded ferromagnetic recording film with perpendicular magnetic anisotropy is provided. The particular design in the present invention not only solves the problems described above, but also is easy to be implemented. Thus, the present invention has the utility for the industry.

### SUMMARY OF THE INVENTION

In accordance with one aspect of the present invention, a discontinuous islanded ferromagnetic recording film with perpendicular magnetic anisotropy is provided. The discontinuous islanded ferromagnetic recording film includes a substrate; and a ferromagnetic layer formed on the substrate; wherein a surface energy difference existed between the ferromagnetic layer and the substrate turns the ferromagnetic layer into well-separated and discontinuous islanded ferromagnetic particles after performing a high-temperature vacuum annealing process, each discontinuous islanded ferromagnetic particle is thought of a single magnetic domain, so as to obtain the discontinuous islanded ferromagnetic recording film with perpendicular magnetic anisotropy.

Preferably, the substrate is amorphous.

Preferably, the substrate is made of a glass substance.

Preferably, a surface energy of the ferromagnetic layer is larger than the substrate.

Preferably, the ferromagnetic layer is made of a Fe-based alloy film.

Preferably, the Fe-based alloy film is a multilayer (Fe/Pt) alloy film.

Preferably, the ferromagnetic layer is formed on the substrate by a magnetron sputtering.

Preferably, a film thickness of the ferromagnetic layer is below 5 nm.

Preferably, the high-temperature vacuum annealing process is performed for the ferromagnetic layer at a temperature range of 600-800 °C for 5∼15 minutes with a vacuum range of 1∼10 mTorr.

Preferably, the high-temperature vacuum annealing process is performed under a protection gas of argon (Ar).

Preferably, the surface energy difference is in a range of 1500∼2500 erg/cm².

Preferably, a diameter of the discontinuous islanded ferromagnetic particle is in a range of 2.5∼5 nm.

Preferably, an out-of-plane coercivity of the discontinuous islanded ferromagnetic recording film is larger than 20000 Oe.

Preferably, a saturation magnetization of the discontinuous islanded ferromagnetic recording film is larger than 400 emu/cm³.

Preferably, an out-of-plane squareness of the discontinuous islanded ferromagnetic recording film is larger than 0.7.

Preferably, a density of the discontinuous islanded ferromagnetic particles on the substrate is larger than 1.5×10¹³ islands/inch²_{.}

The above objects and advantages of the present invention will become more readily apparent to those ordinarily skilled in the art after reviewing the following detailed descriptions and accompanying drawings, in which:

### BRIEF DESCRIPTION OF THE DRAWINGS

Fig. 1 shows the structure of the discontinuous islanded ferromagnetic recording film according to a preferred embodiment of the present invention;

Figs. 2A∼2D show the field emission gun transmission electron microscope (FEG-TEM) images of the multilayer (Fe/Pt) alloy films of the present invention and the comparative examples after annealing;

Figs. 3A∼3B show the hysteresis curves of the multilayer (Fe/Pt) alloy films of the present invention and the comparative example 1 after annealing, which are measured by a superconducting quantum interference device (SQUID).

Figs. 4A∼4B show the hysteresis curves of the multilayer (Fe/Pt) alloy films of the comparative example 2 and the comparative example 3 after annealing, which are measured by a vibrating sample magnetometer (VSM).

### DETAILED DESCRIPTION OF THE PREFERRED EMBODIMENT

The present invention will now be described more specifically with reference to the following embodiments. It is to be noted that the following descriptions of preferred embodiments of this invention are presented herein for the purposes of illustration and description only; it is not intended to be exhaustive or to be limited to the precise form disclosed.

The present invention provides a well-separated and discontinuous islanded ferromagnetic recording film with perpendicular magnetic anisotropy. The well-separated and discontinuous islanded ferromagnetic recording film includes a substrate and a ferromagnetic layer. The substrate is one of a glass substrate or a substrate having a surface energy which is smaller than the ferromagnetic layer, and the structure of the substrate is amorphous. The ferromagnetic layer is formed on the substrate by a direct current magnetron sputtering. The ferromagnetic layer is a Fe-based alloy film, preferably a multilayer (Fe/Pt) alloy film with a film thickness below 5 nm. A high-temperature vacuum annealing process is performed for the as-deposited multilayer (Fe/Pt) alloy film at a temperature of 700 °C for 10 minutes with a vacuum of 1 mTorr, wherein the high-temperature vacuum annealing process is performed under the protection gas of argon (Ar). The multilayer (Fe/Pt) alloy film could reduce the diffusion length of Fe atoms and Pt atoms for ordering transformation and promote the ordering face-centered tetragonal (FCT) L1₀ FePt(001) texture formation. A surface energy difference existed between the multilayer (Fe/Pt) alloy film and the substrate turns the multilayer (Fe/Pt) alloy film into well-separated and discontinuous islanded ferromagnetic particles after performing the high-temperature vacuum annealing process. An out-of-plane coercivity (Hc ⊥ ) of the discontinuous islanded ferromagnetic recording film is larger than 20000 Oe after performing the high-temperature vacuum annealing process, which reveals a significant potential as the perpendicular magnetic recording media for ultra high-density recording.

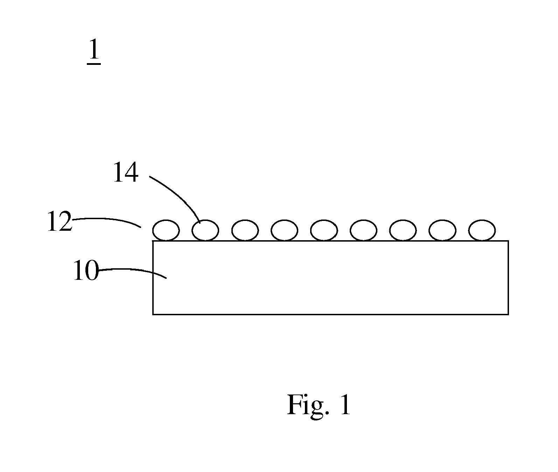

Please refer to Fig. 1, which shows the structure of the discontinuous islanded ferromagnetic recording film according to a preferred embodiment of the present invention. According to Fig. 1, the discontinuous islanded ferromagnetic recording film 1 of the present invention includes a substrate 10 and a ferromagnetic layer 12. The substrate 10 is made of a glass or an amorphous substance, and the ferromagnetic layer 12 is formed on the substrate 10 by a direct current magnetron sputtering. The material of the ferromagnetic layer 12 is selected from Fe-based alloy films, preferably a multilayer (Fe/Pt) alloy film with a film thickness below 5 nm. The content of Fe in the multilayer (Fe/Pt) alloy film is 40-60 at%, preferably Fe₅₀Pt₅₀.

As seen in Fig. 1, the discontinuous islanded ferromagnetic recording film 1 with perpendicular magnetic anisotropy of the present invention includes a glass substrate 10 and a multilayer (Fe/Pt) alloy film 12. The sputtering power densities for the multilayer (Fe/Pt) alloy film 12 is controlled at 1.23 watt/cm² for Fe and 0.25 watt/cm² for Pt. The substrate 10 is at ambient temperature. The Ar pressure in the sputtering chamber is fixed at 6 mTorr, and the rotation rate of the substrate 10 is fixed at 5 rpm. The as-deposited film is annealed in a high-temperature vacuum annealing furnace with the protection gas of Ar at a temperature of 700 °C for 10 minutes with a vacuum of 1 mTorr and then water cooled, so that well-separated and discontinuous islanded ferromagnetic particles 14 could be formed after performing the high-temperature vacuum annealing process for the multilayer (Fe/Pt) alloy film 12. The discontinuous islanded ferromagnetic particle 14 is an ordering L1₀ FePt hard phase having a face-centered tetragonal crystal structure with high magnetocrystalline anisotropy constant, which is benefit for obtaining a high performance magnetic recording alloy film.

The magnetic properties of the multilayer (Fe/Pt) alloy film of the present invention is measured by the superconducting quantum interference device (SQUID) and vibrating sample magnetometer (VSM), and the microstructure thereof is observed by the field emission gun transmission electron microscope (FEG-TEM).

Embodiment

The as-deposited 1 nm multilayer (Fe/Pt) alloy film is annealed in a high-temperature vacuum annealing furnace with the protection gas of Ar at 700 °C for 10 minutes with a vacuum of 1 mTorr and then water cooled.

Comparative example 1

The as-deposited 1 nm multilayer (Fe/Pt) alloy film is annealed in a high-temperature vacuum annealing furnace with the protection gas of Ar at 700 °C for 30 minutes with a vacuum of 1 mTorr and then water cooled.

Comparative example 2

The as-deposited 5 nm multilayer (Fe/Pt) alloy film is annealed in a high-temperature vacuum annealing furnace with the protection gas of Ar at 700 °C for 30 minutes with a vacuum of 1 mTorr and then water cooled.

Comparative example 3

The as-deposited 15 nm multilayer (Fe/Pt) alloy film is annealed in a high-temperature vacuum annealing furnace with the protection gas of Ar at 700 °C for 30 minutes with a vacuum of 1 mTorr and then water cooled.

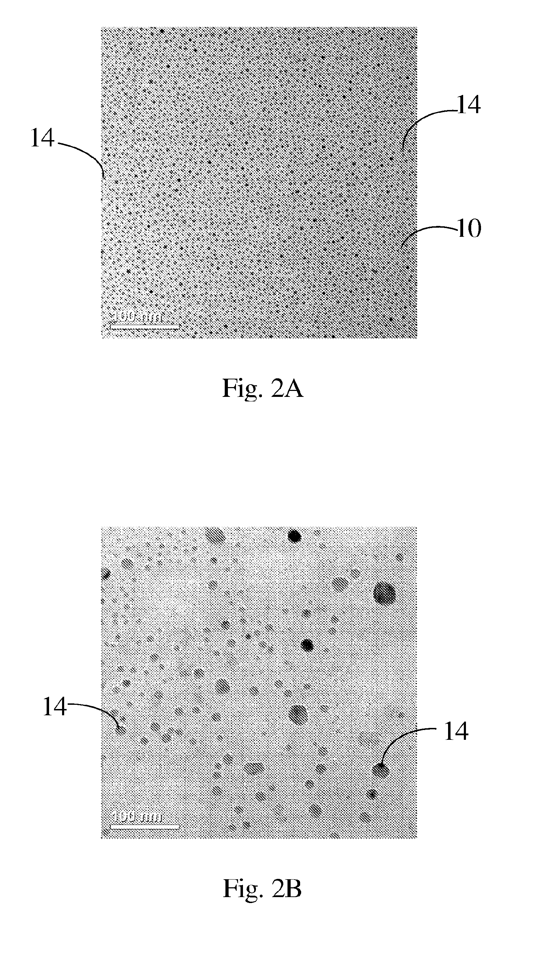

Please refer to Figs. 2A∼2D, which show the FEG-TEM images of the multilayer (Fe/Pt) alloy films of the present invention and the comparative examples after annealing. It can be found in Fig. 2A that the multilayer (Fe/Pt) alloy film would be turned into well-separated and discontinuous islanded ferromagnetic particles 14 after performing a high-temperature vacuum annealing process due to decrease the surface energy difference of 1500∼2500 erg/cm² which exists between the multilayer (Fe/Pt) alloy film and the substrate 10. The diameter of the well-separated and discontinuous islanded ferromagnetic particle 14 is in a range of 2.5∼5 nm, and the density of the discontinuous islanded ferromagnetic particles 14 on the substrate 10 is larger than 1.5×10¹³ islands/inch². Besides, the domain structure of the 1 nm multilayer (Fe/Pt) alloy film tends to isolated magnetic domains and each islanded ferromagnetic particle 14 is thought of a recording bit. Therefore, the 1 nm multilayer (Fe/Pt) alloy film would be a great benefit to increase the recording density and reduces the media noise of the magnetic film.

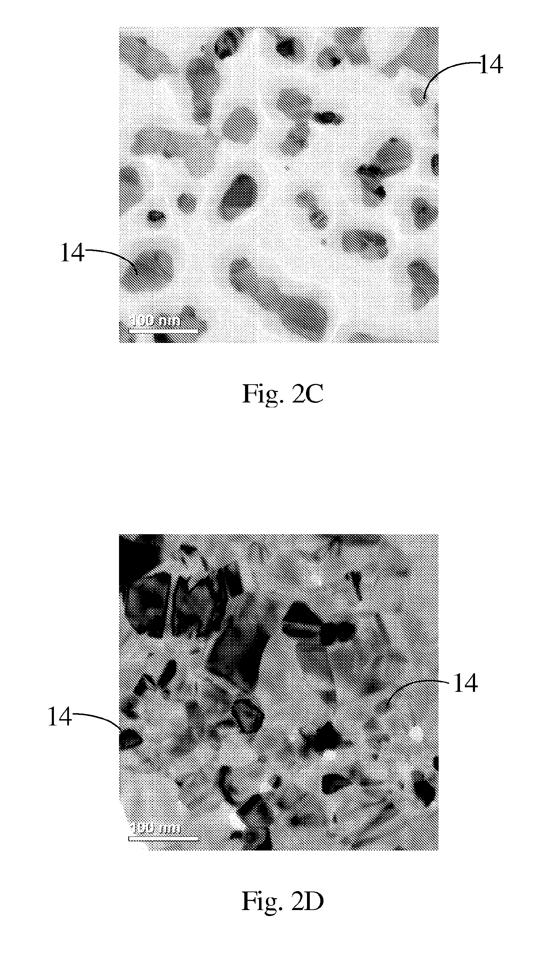

According to Fig. 2B, the discontinuous islanded ferromagnetic particles 14 would interconnect with each other when the annealing time is increased to 30 minutes, which leads to the grain growth, cluster growth and coalescence of the islanded ferromagnetic particles 14. The larger and smaller diameters of the islanded ferromagnetic particles 14 are about 30 nm and 5 nm, respectively. Therefore, the particle size distribution of the multilayer (Fe/Pt) alloy film is not uniform when the annealing time is increased. According to Fig. 2C, the grain growth, cluster growth and coalescence of the islanded ferromagnetic particles 14 are kept to proceed after annealing 30 minutes when the film thickness of the multilayer (Fe/Pt) alloy film is increased to 5 nm. The larger diameter of the islanded ferromagnetic particles 14 is about 100 nm. According to Fig. 2D, the grain growth, cluster growth and coalescence of the islanded ferromagnetic particles 14 are more significant after annealing 30 minutes when the film thickness of the multilayer (Fe/Pt) alloy film is further increased to 15 nm. Thus the diameter of the islanded ferromagnetic particles 14 would be increased when the film thickness of the multilayer (Fe/Pt) alloy film is increased.

According to Figs. 2A∼2D, the size of islanded ferromagnetic particles 14 would be increased when the annealing time and the film thickness of the multilayer (Fe/Pt) alloy films are increased. Therefore, the recording density of the magnetic recording media could not be increased due to the magnetic interaction between the coalescent and interconnected islanded ferromagnetic particles 14.

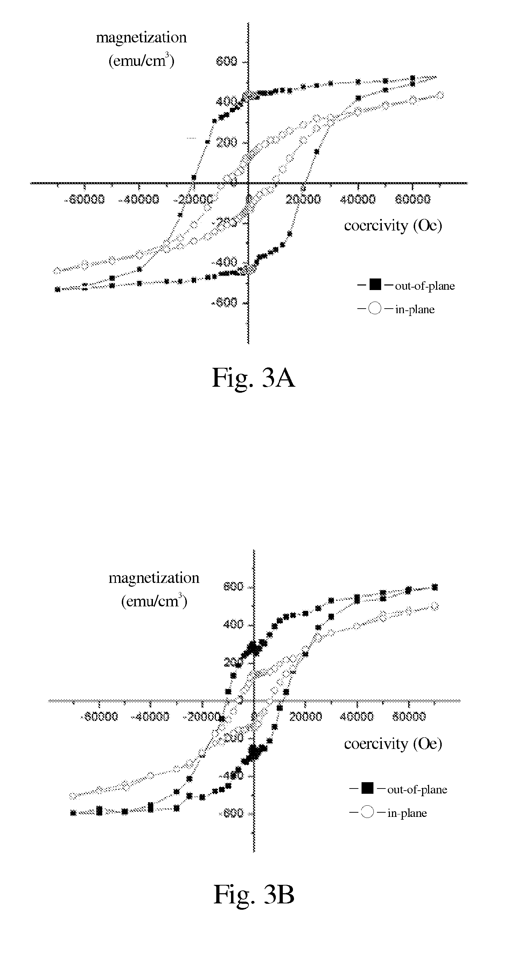

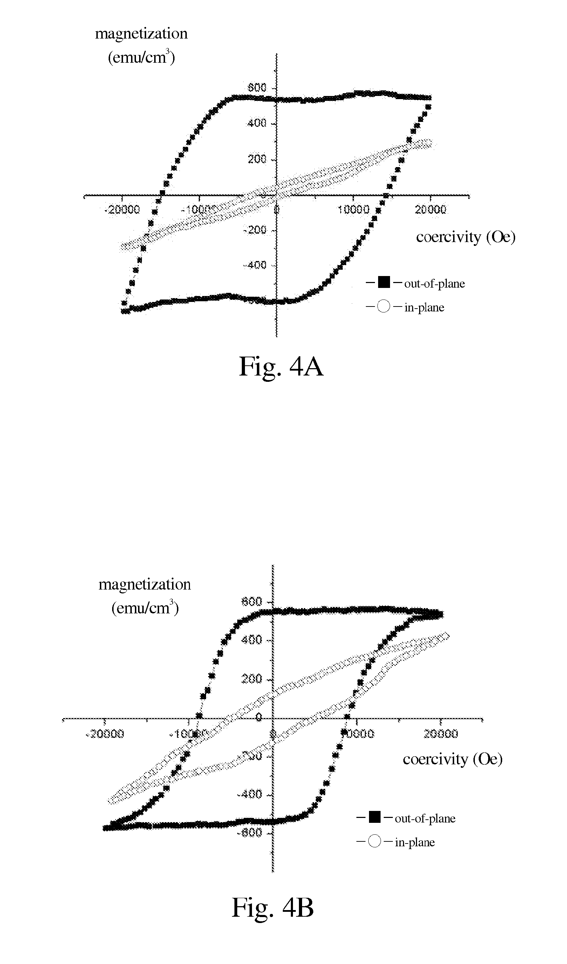

Please refer to Figs. 3A∼3B and Figs. 4A∼4B, which show the SQUID and VSM hysteresis curves of the multilayer (Fe/Pt) alloy films of the present invention and the comparative examples after annealing, respectively. As seen in Figs. 3A∼3B and Figs. 4A∼4B, the squareness of the out-of-plane hysteresis curves are larger than the in-plane of hysteresis curves for the multilayer (Fe/Pt) alloy films. The multilayer (Fe/Pt) alloy films incline toward an out-of-plane magnetic anisotropy. According to Fig. 3A, the saturation magnetization (Ms), out-of-plane coercivity (Hc⊥ ) and out-of-plane squareness (S⊥ ) of the 1 nm multilayer (Fe/Pt) alloy film annealed at 700 °C for 10 minutes are 450 emu/cm³, 21500 Oe and 0.8, respectively, which reveals a prominent candidate to be applied for the perpendicular magnetic recording media. As shown in Figs. 3A and 3B, the shoulder-shaped hysteresis curves may be attributed to that the diameters of some islanded ferromagnetic particles are smaller than the superparamagnetic size, or the part of face-centered cubic (FCC) FePt soft magnetic phase is not transferred into the ordering face-centered tetragonal (FCT) L1₀ FePt hard magnetic phase completely.

According to the present invention, a well-separated and discontinuous islanded ferromagnetic recording film with perpendicular magnetic anisotropy could be achieved by a high-temperature vacuum annealing process at a temperature of 700 °C for 10 minutes with a vacuum of 1 mTorr. The out-of-plane coercivity, saturation magnetization and out-of-plane squareness of the 1 nm multilayer (Fe/Pt) alloy film annealed at 700 °C for 10 minutes are larger than 20000 Oe, 400 emu/cm³ and 0.7, respectively. The diameter of the discontinuous islanded ferromagnetic particle is in a range of 2.5∼5 nm, and the density of the discontinuous islanded ferromagnetic particles on the substrate is larger than 1.5×10¹³ islands/inch². Besides, the domain structure of the 1 nm multilayer (Fe/Pt) alloy film annealed at 700 °C for 10 minutes tends to isolated magnetic domains, and each discontinuous islanded ferromagnetic particle is thought of a single magnetic domain. Therefore, the 1 nm multilayer (Fe/Pt) alloy film annealed at 700 °C for 10 minutes would be a great benefit to increase the recording density and reduces the media noise of the magnetic film, which reveals the prominent candidate to be applied for the perpendicular magnetic recording media.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A discontinuous islanded ferromagnetic recording film with perpendicular magnetic anisotropy, comprising:
a substrate; and
a ferromagnetic layer formed on the substrate;
wherein a surface energy difference existed between the ferromagnetic layer and the substrate turns the ferromagnetic layer into well-separated and discontinuous islanded ferromagnetic particles after performing a high-temperature vacuum annealing process, each discontinuous islanded ferromagnetic particle is thought of a single magnetic domain, so as to obtain the discontinuous islanded ferromagnetic recording film with perpendicular magnetic anisotropy.

2. A discontinuous islanded ferromagnetic recording film as claimed in Claim 1, wherein the substrate is amorphous.

3. A discontinuous islanded ferromagnetic recording film as claimed in Claim 1, wherein the substrate is made of a glass substance.

4. A discontinuous islanded ferromagnetic recording film as claimed in Claim 1, wherein a surface energy of the substrate is smaller than the ferromagnetic layer.

5. A discontinuous islanded ferromagnetic recording film as claimed in Claim 1, wherein the ferromagnetic layer is made of a Fe-based alloy film.

6. A discontinuous islanded ferromagnetic recording film as claimed in Claim 5, wherein the Fe-based alloy film is a multilayer (Fe/Pt) alloy film.

7. A discontinuous islanded ferromagnetic recording film as claimed in Claim 1, wherein the ferromagnetic layer is formed on the substrate by a magnetron sputtering.

8. A discontinuous islanded ferromagnetic recording film as claimed in Claim 1, wherein a film thickness of the ferromagnetic layer is below 5 nm.

9. A discontinuous islanded ferromagnetic recording film as claimed in Claim 1, wherein the high-temperature vacuum annealing process is performed for the ferromagnetic layer at a temperature range of 600-800 °C for 5∼15 minutes with a vacuum range of 1∼10 mTorr.

10. A discontinuous islanded ferromagnetic recording film as claimed in Claim 1, wherein the high-temperature vacuum annealing process is performed under a protection gas of argon (Ar).

11. A discontinuous islanded ferromagnetic recording film as claimed in Claim 1, wherein the surface energy difference is in a range of 1500∼2500 erg/cm².

12. A discontinuous islanded ferromagnetic recording film as claimed in Claim 1, wherein a diameter of the discontinuous islanded ferromagnetic particle is in a range of 2.5∼5 nm.

13. A discontinuous islanded ferromagnetic recording film as claimed in Claim 1, wherein an out-of-plane coercivity of the discontinuous islanded ferromagnetic recording film is larger than 20000 Oe.

14. A discontinuous islanded ferromagnetic recording film as claimed in Claim 1, wherein a saturation magnetization of the discontinuous islanded ferromagnetic recording film is larger than 400 emu/cm³.

15. A discontinuous islanded ferromagnetic recording film as claimed in Claim 1, wherein an out-of-plane squareness of the discontinuous islanded ferromagnetic recording film is larger than 0.7.

16. A discontinuous islanded ferromagnetic recording film as claimed in Claim 1, wherein a density of the discontinuous islanded ferromagnetic particles on the substrate is larger than 1.5×10¹³ islands/inch²_{.}
